# EUROPÄISCHE PATENTSCHRIFT

(11) **EP 0 499 889 B1**
(45) Veröffentlichungstag und Bekanntmachung des Hinweises auf die Patenterteilung: **02.10.1996**
(21) Anmeldenummer: 92101947.7
(22) Anmeldetag: 06.02.1992
(51) Int. Cl.: C23C 4/08, B23K 35/30, B32B 15/01

(54) **Vorrichtung zum Verschliessen von Koksöfen und Verfahren zum Beschichten des Rahmens einer Koksofentür.**
Device for sealing a coke oven and process for the frames of a the door of the coke oven.
Dispositif d'obturation d'un four à coke et procédé pour revêtir l'encadrement de la porte du four à coke.

(30) Priorität: 16.02.1991 DE 4104832
(43) Veröffentlichungstag der Anmeldung: 26.08.1992
(73) Patentinhaber: CASTOLIN S.A., CH-1025 Lausanne - St. Sulpice (CH)
(72) Erfinder: Van Houten, Paul Reinder, NL-2691 CJ 's-Gravenzande (NL)
(74) Vertreter: Hiebsch, Gerhard F., Dipl.-Ing.

(56) Entgegenhaltungen:
- EP-A- 0 223 135
- EP-A- 0 309 657
- DE-A- 2 744 189
- US-A- 4 075 392
- CHEMICAL ABSTRACTS, Band 109, Nr. 10, September 1988, Columbus, OH (US); K. YAMASHITA et al., Seite 266, Nr. 77668a

## Beschreibung

Die Erfindung betrifft eine Vorrichtung zum Verschließen von Koksöfen in Form einer in einem Rahmen aufgehängten Koksofentür aus Metall. Zudem erfaßt die Erfindung ein geeignetes Verfahren zum Beschichten des Rahmens der Koksofentüre.

Für das Entgasen oder Verkoken insbesondere von Steinkohle durch vielstündiges Erhitzen unter Luftabschluß dienen Koksofenbatterien, deren einzelne -- jeweils zwischen 20 und 70 Tonnen Kohle aufnehmende -- schmale Ofenkammern beidends durch Koksofentüren dicht verschlossen sind. Sie sind bei der Schwelung Temperaturen von 600°C, bei der Hochtemperaturverkokung zwischen 900°C und 1300°C ausgesetzt. Die beim Erhitzen einer Tonne Trockenkohle entstehenden etwa 400 m³ Gas greifen mit ihren Rohteerdämpfen und dem Permanentgas (etwa 55 % H₂; 20 % CH4; 10 % N2; 6 % CO; 2 % CO₂ und 7 % andere gasf. Kohlenwasserstoffe) vor allem den Werkstoff der Türen und ihrer Rahmen stark an. Desweiteren sind mechanische Stöße durch die Ausdrückwerkzeuge von nachteiligem Einfluß.

Die oben genannten Türen und deren Rahmen an Koksöfen in Stahlwerken sind durch die austretenden Heißgase beim Füllen mit Kohle oder beim Ausstoßen des Kokses sehr stark auf Korrosion sowie mechanischen Verschleiß an den Schließflächen beansprucht und müssen daher in einer relativ kurzen Zeit gegen neue ausgetauscht werden.

Um die Kosten insbesondere für solche Ofentürrahmen so gering wie möglich zu halten, wurden diese früher in den meisten Fällen vom Stahlwerk selbst aus Grauguss hergestellt. Nach den in vielen Stahlwerken vorgenommenen Umstrukturierungen ist dies aber nun nicht mehr möglich, und es wurde notwendig, eine Methode zu entwickeln, dank deren die Standzeiten der Koksofentüren, vor allem aber ihrer Rahmen, um ein Mehrfaches erhöht werden können, um so die ansonsten durch eine Fremdherstellung auftretenden hohen Kostenlasten in eine vertretbare Größenordnung abzusenken.

Zur Lösung dieser Aufgabe führt die Lehre nach Patentanspruch 1 ; es wurde überraschenderweise gefunden, daß es bei den beschriebenen Verschleiß- bzw. Korrosionsbeanspruchungen am besten ist, auf die Schließflächen an den Rahmen für die Koksofentüren mittels eines elektrischen oder autogenen Beschichtungsverfahrens eine Schicht mit einer Schichtdicke von 0,1 bis 10,0 mm -- insbesondere 0,1 bis 8,0 mm bei einem bevorzugten Bereich zwischen 0,5 und 6,0 mm -- aus einem metallischen Werkstoff als Verschleiß- und Korrosionsschutz aufzubringen, wodurch in der Tat die Kosten im erhofften Umfang vermindert werden können. Erfindungsgemäß dient dafür eine Legierung auf Nickel-, Eisen- und/oder Kobalt-Basis mit Zusätzen von 0,1 bis 35,0 % Chrom, 0,05 bis 4,0 % Silicium, 0,02 bis 2,0 % Kohlenstoff, Mangan, das jedoch in einer größenordnung unter 2,1 Gew.-% vorhanden ist, sowie fakultativ < 12,1 % Wolfram, < 10,1 % Molybdän und < 4,1 % Bor.

Zwar ist durch DE-A-2744189 ein Verfahren zum Verbessern der Verschleißeigenschaften von Eisenmetallteilen wie Wärmeaustauscherelementen -- mit einer thermischen, bei Raumtemperatur gemessenen Leitfähigkeit bezüglich Silber von mindestens 0,06 Kal./cm²/cm/°C/Sek., wenn die Leitfähigkeit des Silbers mit 1 angesetzt wird -- durch Erzeugung einer stark schützenden Schicht in einer Dicke von 0,127 bis 0,381 mm aus einer selbstgehenden Wärme- und korrosionsresistenten Legierung bekannt, die eine Nickel-, Kupfer-, Eisen- oder Kobalt-Legierung als Basis legierung sowie Zusätze von 0 bis 20,0 % Cr; 0,1 bis 6,0 % Si; bis 3,0 % C; 0 bis 15 % W; 0 bis 10 % Mo; 0,5 bis 5 % B aufweist.

Weiterbildungen des Gegenstandes nach dem unabhängigen Patentanspruch sind den abhängigen Ansprüchen zu entnehmen.

Der erfindungsgemäße Einsatz der in den Patentansprüchen genannten metallischen Werkstoffe bzw. Legierungen kann je nach dem verwendeten Beschichtungsverfahren -- beispielsweise dem Plasmapulver-Auftragsschweißen, dem thermischen Spritzen mit und ohne nachträglichem Einschmelzen, dem Metall-Inertgas-Schweißen (MIG) oder dem Wolfram-Inertgas-Schweißen (TIG), aber auch durch Elektroden-Handschweißen -- als pulverförmige Werkstoffe, Füll- oder Massivdrähte, als Band oder als umhüllte Elektroden erfolgen.

In Abhängigkeit von dem jeweils ausgewählten Beschichtungsverfahren ist -- wie etwa beim thermischen Spritzverfahren -- nach dem Beschichten und vor dem Wiedereinsetzen der Ofentür ein Nachbearbeiten nicht mehr notwendig.

Weitere Vorteile sowie Einzelheiten der Erfindung ergeben sich aus der nachfolgenden Beschreibung bevorzugter Ausführungsbeispiele, im Rahmen der Vorgaben des unabhängigen Patentanspruch.

### Beispiel I

Ein an der Oberfläche beschädigter Rahmen einer Koksofentür aus Grauguss wurde durch Plasmapulverauftragsschweissen mit einer Kobaltbasislegierung mit Zusätzen von 4 % W, 1 % C, 30 % Cr und anderen -- für Stahlflächen üblichen -- Legierungselementen beschichtet. Erst nach einer -- im Vergleich gemäß Beispiel II -- fünffachen Standzeit konnten leichte Beschädigungen an der Dichtfläche festgestellt werden.

### Beispiel II

### (nicht erfindungsgemäß)

Die korrodierte und verschlissene Oberfläche eines Koksofentürrahmens und dem MIG Schweissverfahren wurde unter Verwendung eines Fülldrahtes auf Eisenbasis mit Zusätzen von Ni, Cr, Mo im Bereich von 2 bis 5 % beschichtet. Die Standzeit entsprach einem Mehrfachen des Einsatzes eines nicht beschichteten Stahlrahmens.

### Beispiel III

### (nicht erfindungsgemäß)

Eine Ofentür wurde entsprechend Beispiel IV behandelt mit dem Unterschied, daß als Legierung eine NiCrBSi-Legierung mit 10 % Chrom, 2 % Bor, 3 % Silicium, 2 % Fe, Rest Ni, verwendet wurde. Auch hier entstand ein entsprechend günstiges Ergebnis.

## Patentansprüche

1. Vorrichtung zum Verschließen von Koksöfen in Form einer in einem Rahmen aufgehängten Koksofentür aus Metall,
dadurch gekennzeichnet,
daß der Rahmen zum Herabsetzen des Verschleißes durch Heißgaskorrosion mit einer Nickel-, Eisen- und/oder Kobalt-Legierung, die Zusätze von 0,1 bis 35,0 Gew.-% Cr; 0,05 bis 4,0 Gew.-% Si; 0,02 bis 2,0 Gew.-% C; Mn > 0, jedoch unter 2,1 Gew.-%; unter 12,1 Gew-% W; unter 10,1 Gew.-% Mo und unter 4,1 Gew.-% B enthält, in einer Dicke von 0,1 bis 10,0 mm beschichtet ist.

2. Vorrichtung nach Anspruch 1, dadurch gekennzeichnet, daß die Schichtdicke der Beschichtung zwischen 0,1 und 8,0 mm liegt.

3. Vorrichtung nach Anspruch 1 oder 2, dadurch gekennzeichnet, daß die Schichtdicke der Beschichtung zwischen 0,5 und 6,0 mm liegt.

4. Vorrichtung nach einem der Ansprüche 1 bis 3, gekennzeichnet durch eine Legierung im Legierungsbereich von 10,0 bis 30,0 Gew.-% Cr; 0,1 bis 2,0 Si; 0,1 bis 2,0 Gew.-% C; unter 12,1 Gew.-% W; unter 10,1 Gew.-% Mo; unter 2,1 Gew.% Mn und Rest Co.., Ni und/oder Fe als Beschichtungswerkstoff.

5. Vorrichtung nach einem der Ansprüche 1 bis 3, gekennzeichnet durch eine Legierung im Legierungsbereich von 0,1 bis 16,0 Gew.-% Cr; 0,5 bis 4,0 Gew.-% Si; 0,1 bis 1,0 Gew.-% C; unter 3,1 % B; unter 6,1 Gew.-% W; unter 6,1 Gew.-% Mo; unter 1,1 Gew.-% Mn, Rest Co und/oder Fe als Beschichtungswerkstoff.

6. Verfahren zum Beschichten des Rahmens einer Koksofentür nach wenigstens einem der Ansprüche 1 bis 5, dadurch gekennzeichnet, daß der Rahmen mit einem Werkstoff auf Ni-, Fe- und/oder Co-Basis mit Zusätzen von 0,1 bis 35,0 Gew.-% Cr; 0,05 bis 4,0 Gew.-% Si; Mn>0, jedoch unter 2,1 Gew. %; 0,02 bis 2,0 Gew.-% C; unter 12,1 Gew.-% W; unter 10,1 Gew.-% Mo und unter 4,1 Gew.-% B durch ein Schweiß- oder Spritzverfahren beschichtet wird.

7. Verfahren nach Anspruch 6, gekennzeichnet durch einen Beschichtungswerkstoff in Legierungsbereichen von 10,0 bis 30 Gew.-% Cr; 0,1 bis 2,0 Gew.-% Si; 0,1 bis 1,5 Gew.-% C; unter 12,1 Gew.-% W; unter 10,1 Gew.-% Mo; unter 2,1 Gew.-% Mn, Rest Co, Ni und/oder FE.

8. Verfahren nach Anspruch 6, gekennzeichnet durch einen Beschichtungswerkstoff in Legierungsbereichen von 0,1 bis 16 Gew.-% Cr; 0,5 bis 4,0 Gew.-% Si; 0,1 bis 1,0 Gew.-% C; unter 3,1 Gew.-% B; unter 6,1 Gew.-% W; unter 6,1 Gew.-% Mo; unter 1,1 Gew.-% Mn, Rest Ni, Co und/oder Fe.

9. Verfahren nach Anspruch 6, dadurch gekennzeichnet, daß die Schicht durch Auftragsschweißen mit einem Plasma oder mit einem thermischen Spritzverfahren aufgebracht wird.

10. Verfahren nach Anspruch 9, dadurch gekennzeichnet, daß die Schicht durch nachträgliches Einschmelzen behandelt wird.

11. Verfahren nach Anspruch 6, dadurch gekennzeichnet, daß die Schicht durch ein MIG-Schweißverfahren oder durch ein TIG-Schweißverfahren aufgetragen wird.

12. Verfahren nach einem der Ansprüche 6 bis 11, dadurch gekennzeichnet, daß als Beschichtungswerkstoff für den Rahmen der Koksofentür ein pulverförmiger Werkstoff oder ein Fülldraht, ein legierter Massivdraht oder ein Band aufgeschmolzen wird.

## Claims

1. Device for sealing coke ovens in the form of a metal coke-oven door hung in a frame, characterised in that the frame is coated with a nickel, iron and/or cobalt alloy containing 0.1 to 35.0 % by weight Cr, 0.05 to 4.0 % by weight Si, 0.02 to 2.0 % by weight C, > 0, but less than 2.1 % by weight Mn, less than 12.1 % by weight W, less than 10.1 % by weight Mo and less than 4.1 % by weight B, to a thickness of 0.1 to 10.0 mm, in order to reduce wear as a result of hot corrosion.

2. Device according to claim 1, characterised in that the thickness of the coating is between 0.1 and 8.0 mm.

3. Device according to claim 1 or claim 2, characterised in that the thickness of the coating is between 0.5 and 6.0 mm.

4. Device according to one of claims 1 to 3, characterised by an alloy in the alloying range of 10.0 to 30.0 % by weight Cr, 0.1 to 2.0 Si, 0.1 to 2.0 % by weight C, less than 12.1 % by weight W, less than 10.1 % by weight Mo, less than 2.1 % by weight Mn and the balance Co, Ni and/or Fe as the coating material.

5. Device according to one of claims 1 to 3, characterised by an alloy in the alloying range of 0.1 to 16.0 % by weight Cr, 0.5 to 4.0 % by weight Si, 0.1 to 1.0 % by weight C, less than 3.1 % by weight B, less than 6.1 % by weight W, less than 6.1 % by weight Mo, less than 1.1 % by weight Mn and the balance Co and/or Fe as the coating material.

6. Process for coating the frame of a coke-oven door according to at least one of claims 1 to 5, characterised in that the frame is coated with a material based on Ni, Fe and/or Co, containing 0.1 to 35.0 % by weight Cr, 0.05 to 4.0 % by weight Si, > 0, but less than 2.1 % by weight Mn, 0.02 to 2.0 % by weight C, less than 12.1 % by weight W, less than 10.1 % by weight Mo and less than 4.1 % by weight B by welding or spraying.

7. Process according to claim 6, characterised by a coating material in alloying ranges of 10.0 to 30 % by weight Cr, 0.1 to 2.0 % by weight Si, 0.1 to 1.5 % by weight C, less than 12.1 % by weight W, less than 10.1 % by weight Mo, less than 2.1 % by weight Mn and the balance Co, Ni and/or Fe.

8. Process according to claim 6, characterised by a coating material in alloying ranges of 0.1 to 16 % by weight Cr, 0.5 to 4.0 % by weight Si, 0.1 to 1.0 % by weight C, less than 3.1 % by weight B, less than 6.1 % by weight W, less than 6.1 % by weight Mo, less than 1.1 % by weight Mn and the balance Ni, Co and/or Fe.

9. Process according to claim 6, characterised in that the coating is applied by plasma surfacing or by thermal spraying.

10. Process according to claim 9, characterised in that the coating is treated by subsequent fusing.

11. Process according to claim 6, characterised in that the coating is applied by MIG welding or by TIG welding.

12. Process according to one of claims 6 to 11, characterised in that a pulverulent material or a flux-cored wire, an alloyed solid wire or a strip is fused as the coating material for the frame of the coke-oven door.

## Revendications

1. Dispositif de fermeture des fours à coke sous forme d'une porte de four à coke en métal, suspendue dans un cadre, caractérisé en ce que, pour diminuer l'usure due à la corrosion engendrée par le gaz chaud, le cadre est revêtu d'une couche, de 0,1 à 10,0 mm d'épaisseur, d'un alliage de nickel, fer et/ou cobalt, auquel on ajoute 0,1 à 35,0 % en poids de Cr ; 0,05 à 4,0 % en poids de Si ; 0,02 à 2,0 % en poids de C ; Mn > 0, toutefois inférieur à 2,1 % en poids ; moins de 12,1 % en poids de W ; moins de 10,1 % en poids de Mo et moins de 4,1 % en poids de B.

2. Dispositif selon la revendication 1, caractérisé en ce que l'épaisseur de la couche de revêtement est comprise entre 0,1 et 8,0 mm.

3. Dispositif selon la revendication 1 ou 2, caractérisé en ce que l'épaisseur de la couche de revêtement est comprise entre 0,5 et 6,0 mm.

4. Dispositif selon l'une quelconque des revendications 1 à 3, caractérisé par un alliage dans le domaine d'alliage de 10,0 à 30,0 % en poids de Cr ; 0,1 à 2,0 % en poids de Si ; 0,1 à 2,0 % en poids de C ; inférieur à 12,1 % en poids de W ; inférieur à 10,1 % en poids de Mo ; inférieur à 2,1 % en poids de Mn, le reste Co, Ni et/ou Fe, utilisé comme matériau de revêtement.

5. Dispositif selon l'une quelconque des revendications 1 à 3, caractérisé par un alliage dans le domaine d'alliage de 0,1 à 16,0 % en poids de Cr ; 0,5 à 4,0 % en poids de Si ; 0,1 à 1,0 % en poids de C ; inférieur à 3,1 % en poids de B ; inférieur à 6,1 % en poids de W ; inférieur à 6,1 % en poids de Mo ; inférieur à 1,1 % en poids de Mn, le reste Co et/ou Fe, utilisé comme matériau de revêtement.

6. Procédé de revêtement du cadre d'une porte de four à coke selon au moins l'une quelconque des revendications 1 à 5, caractérisé en ce que le cadre est revêtu, par un procédé de soudage ou pulvérisation au pistolet, d'un matériau de base Ni, Fe et/ou Co, auquel on ajoute 0,1 à 35,0 % en poids de Cr ; 0,05 à 4,0 % en poids de Si ; Mn > 0, toutefois inférieur à 2,1 % en poids ; 0,02 à 2,0 % en poids de C ; moins de 12,1 % en poids de W ; moins de 10,1 % en poids de Mo et moins de 4,1 % en poids de B.

7. Procédé selon la revendication 6, caractérisé par un matériau de revêtement dans les domaines d'alliage de 10,0 à 30 % en poids de Cr ; 0,1 à 2,0 % en poids de Si ; 0,1 à 1,5 % en poids de C ; inférieur à 12,1 % en poids de W ; inférieur à 10,1 % en poids de Mo ; inférieur à 2,1 % en poids de Mn, le reste Co, Ni et/ou Fe.

8. Procédé selon la revendication 6, caractérisé par un matériau de revêtement dans les domaines d'alliage de 0,1 à 16 % en poids de Cr ; 0,5 à 4,0 % en poids de Si ; 0,1 à 1,0 % en poids de C ; inférieur à 3,1 % en poids de B ; inférieur à 6,1 % en poids de W ; inférieur à 6,1 % en poids de Mo ; inférieur à 1,1 % en poids de Mn, le reste Ni, Co et/ou Fe.

9. Procédé selon la revendication 6, caractérisé en ce que la couche est déposée par soudage à superposition avec plasma ou avec un procédé de pulvérisation thermique.

10. Procédé selon la revendication 9, caractérisé en ce que la couche est soumise ultérieurement à un traitement de fusion.

11. Procédé selon la revendication 6, caractérisé en ce que la couche est déposée par un procédé de soudage à l'arc MIG ou par un procédé de soudage TIG.

12. Procédé selon l'une quelconque des revendications 6 à 11, caractérisé en ce que le matériau de revêtement pour le cadre de la porte du four à coke, déposé par fusion, est un matériau sous forme de poudre ou un fil métallique de remplissage, un fil massif allié ou un feuillard.
